# EUROPEAN PATENT APPLICATION

(11) **EP 0 919 911 A2**
(43) Date of publication of application: **02.06.1999**
(21) Application number: 98122154.2
(22) Date of filing: 25.11.1998
(51) Int. Cl.: G06F 9/38

(54) **Instruction execution cycle control circuit and control method for controlling execution cycle of instruction in pipeline processing**

(30) Priority: 26.11.1997 JP 324399/97
(71) Applicant: NEC CORPORATION, Tokyo (JP)
(72) Inventor: Ashihara, Koji, Minato-ku, Tokyo (JP); Uno, Kousuke, NEC Telecom Systems, Ltd., Kawasaki-shi, Kanagawa (JP); Shimura, Naoki, NEC Telecom Systems, Ltd., Kawasaki-shi, Kanagawa (JP); Niitsuma, Kazuhiko, NEC Telecom Systems, Ltd., Kawasaki-shi, Kanagawa (JP); Tanabe, Toshiyuki, NEC Telecom Systems, Ltd., Kawasaki-shi, Kanagawa (JP); Teramoto, Hiroki, NEC Telecom Systems, Ltd., Kawasaki-shi, Kanagawa (JP); Saito, Akio, NEC Telecom Systems, Ltd., Kawasaki-shi, Kanagawa (JP)
(74) Representative: VOSSIUS & PARTNER

(57) **Abstract**

An instruction execution cycle control device for controlling an execution cycle of an instruction within a pipeline in pipeline processing, said device comprising a set register (51) for holding execution cycle numbers previously set for every instruction; and an execution cycle control unit (40) receiving an instruction to be executed, obtaining an execution cycle number corresponding to the received instruction, which is held in said execution cycle number holding means (51), and stopping updating the state of each circuit for use in execution of the instruction, in the processor, according to the obtained execution cycle number, for controlling the execution cycle of the instruction.

## Description

The present invention relates to an instruction execution cycle control circuit and the control method for varying the cycle number of a basic clock for executing an instruction according to the type of the instruction in a pipeline processor.

The execution cycle of each instruction during a pipeline is fixed for an integral multiple of a basic clock, in a pipeline processor. This is because it needs adjusting timing again according to a basic clock when passing through a pipeline controlled at the basic clock.

The execution cycle of an instruction in the processor depends on the type of an instruction (content of the processing). In pipeline processing, the highest frequency of a basic clock is determined according to the execution cycle of an most-delayed instruction.

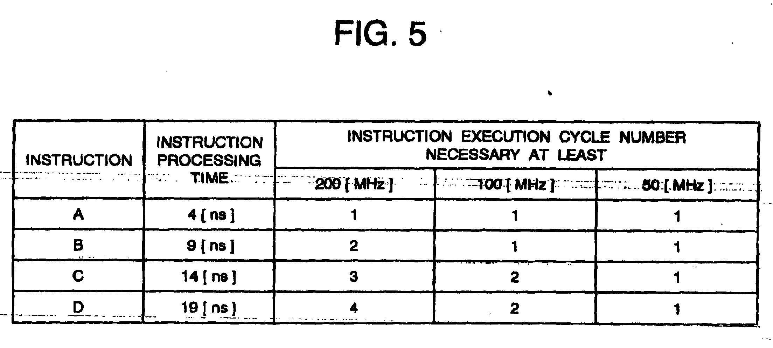

Fig. 5 shows an example of each instruction operation time. Fig. 5 shows the numbers of execution cycles (hereinafter, referred to as an execution cycle number) necessary to execute each instruction operation on condition that each time necessary for four types of instruction operations "A", "B", "C", and "D" is defined as 4 [ns], 9 [ns], 14 [ns], and 19 [ns]. In Fig. 5, the execution cycle numbers are respectively shown at three kinds of basic clocks.

It is necessary to adjust timing again at a basic clock because the instruction operations "A", "B", "C", and "D" are respectively integrated into pipeline processing. In case of 200 [MHz] basic clock, the clock cycle number necessary for the processing of the instruction operation "A" is one cycle at least; the clock cycle number necessary for the processing of the instruction operation "B" is two cycles at least; the clock cycle number necessary for the processing of the instruction operation "C" is three cycles at least; and the clock cycle number necessary for the processing of the instruction operation "D" is four cycles at least.

In case of 100 [MHz] basic clock, the clock cycle number necessary for the processing of the instruction operation "A" is one cycle at least; the clock cycle number necessary for the processing of the instruction operation "B" is one cycle at least; the clock cycle number necessary for the processing of the instruction operation "C" is two cycles at least; and the clock cycle number necessary for the processing of the instruction operation "D" is two cycles at least.

In case of 50 [MHz] basic clock, the clock cycle number necessary for the processing of every instruction operation "A", "B", "C", and "D" is one cycle at least.

As mentioned above, if the instruction processing time and the basic clock are given, the conventional method fixes, for example, the clock cycle number necessary for the processing of the instruction operation "A" at one cycle, the clock cycle number necessary for the processing of the instruction operation "B" at one cycle, the clock cycle number necessary for the processing of the instruction operation "C" at two cycles, and the clock cycle number necessary for the processing of the instruction operation "D" at two cycles, and sets up the clock frequency at 100 [MHz].

In this case, the instruction operation "A" can be executed also at the clock frequency of 200 [MHz] with one clock cycle; nevertheless, the instruction operation "A" is arranged to suit with the instruction operation "B" whose processing is more delayed, so that the pipeline processing thereof may be controlled with one clock cycle at the 100 [MHz] clock frequency. Accordingly, an application program mainly including the processing of the instruction operation "A" would not exploit the own potential performance.

In such a case, if it is possible to separately control each clock cycle number in such a way as one clock cycle for use in the processing of the instruction operation "A", two clock cycles for use in the processing of the instruction operation "B", three clock cycles for use in the processing of the instruction operation "C", and four clock cycles for use in the processing of the instruction operation "D", the clock frequency as for the instruction operation "A" may be set up as 200 [MHz]. If every instruction operation "A", "B", "C", and "D" is to be processed at the clock frequency 200 [MHz] in one clock cycle, the gate size must be increased disadvantageously.

Even in case of fixing the clock cycle number necessary for the processing of the instruction operation "A" at one cycle, the clock cycle number necessary for the processing of the instruction operation "B" at one cycle, the clock cycle number necessary for the processing of the instruction operation "C" at two cycles, and the clock cycle number necessary for the processing of the instruction operation "D" at two cycles and setting up the clock frequency at 100 [MHz], there may be such an application program as would be available with the 50 [MHz] clock frequency, because of requiring no high speed processing.

In such a case, the clock frequency may be set at 50 [MHz] even if the clock cycle is not variable. If it is possible to fix every clock cycle number necessary for the processing of each instruction operation "A", "B", "C", and "D" at one cycle, it has an advantage that the number of steps in a program can be decreased and thereby the size thereof can be decreased.

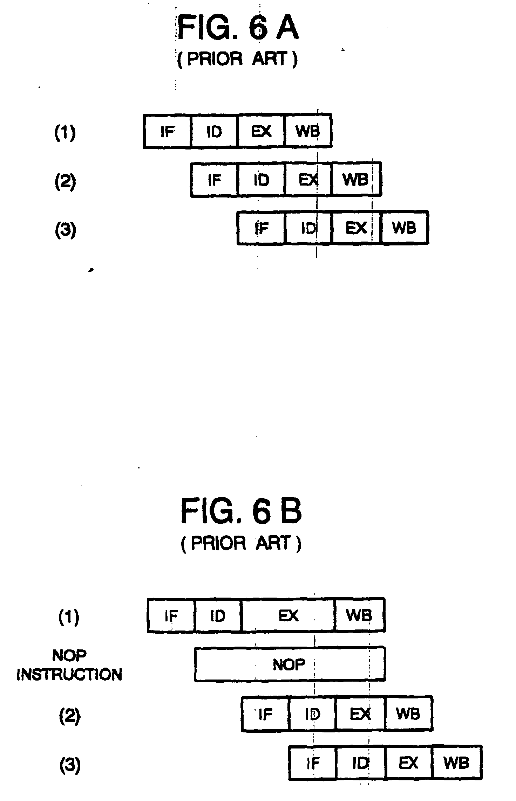

There is a method of inserting a NOP (No Operation) instruction as the conventional method of controlling an instruction in a variable execution cycle in the pipeline processing. The method of controlling in instruction in a variable execution cycle by inserting a NOP instruction will be described with reference to Figs. 6A to 6D.

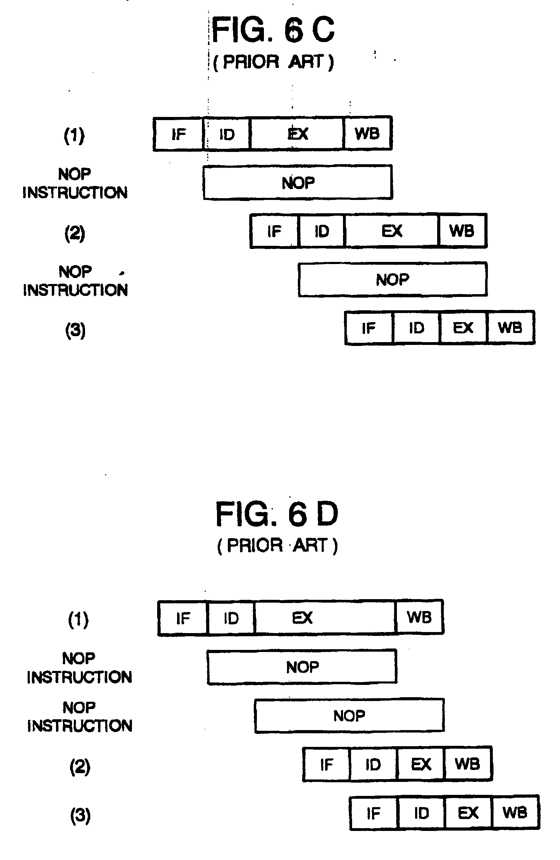

Fig. 6A shows on operation example of every instruction within a pipeline being executed in one cycle; Fig. 6B shows an operation example of an instruction within a pipeline being executed in two cycles; Fig. 6C shows an operation example of two instructions within a pipeline being executed respectively in two cycles; and Fig. 6D shows an operation example of an instruction within a pipeline being executed in three cycles.

Fig. 6A shows the case where the numbers of execution cycles of the instructions (1), (2), and (3) are all set up at "1". In this case, each instruction can be executed without inserting a NOP instruction therebetween.

Fig. 6B shows the case where the instruction (1) is executed in two cycles and the instructions (2) and (3) are respectively executed in one cycle. In this case, one NOP instruction is inserted after the instruction (1) in order to make the execution cycle of the instruction (1) two cycles.

Fig. 6C shows the case where the instructions (1) and (2) are respectively executed in two cycles and the instruction (3) is executed in one cycle. In this case, one NOP instruction must he inserted respectively after the instruction (1) and the instruction (2) in order to make the execution cycle of the both instructions (1) and (2) two cycles.

Fig. 6D shows the case where the instruction (1) is executed in three cycles and the instructions (2) and (3) are respectively executed in one cycle. In this case, two NOP instructions must be inserted after the instruction (1) in order to make the execution cycle of the instruction (1) three cycles.

However, in case of controlling an instruction in a variable execution cycle by inserting a NOP instruction as mentioned above, a program is increased in size. Further, it is necessary to insert a NOP instruction by hand, or with a NOP instruction inserting tool (for example, compiler), which is a troublesome work.

As mentioned above, in the conventional pipeline processor, the execution cycle of each instruction within a pipeline is fixed at an integral multiple of a basis clock; accordingly, the execution cycle of a most delayed instruction imposes a restriction on the highest operating frequency of a basic clock. However, there may be such an application program that a most, delayed instruction is least used. Namely, the most-frequently used instruction can afford to improve the highest operating frequency of a basic clock; nevertheless, a less-frequently used instruction imposes a restriction on the highest operating frequency.

As a result, the conventional pipeline processor is defective and inefficient in exploiting the performance of the application program.

Further, the conventional pipeline processor is defective in economical views because the processor must be increased in the gate size in order to improve the efficiency of processing an application program by controlling every instruction in a variable execution cycle.

Further, in the case where an application program needs no high speed processing, it is possible to reduce the number of steps in the program by controlling each instruction in a variable execution cycle and reduce the size of the program; however, this benefit is not available due to the above-mentioned defect of being uneconomical in controlling every instruction in a variable execution cycle.

An object of the present invention is to provide an instruction execution cycle control circuit and the control method capable of providing the optimum basic clock frequency for the characteristic of an application program, by controlling every instruction in a variable execution cycle, without increasing the gate size, in a pipeline processor.

According to the first aspect of the invention, an instruction execution cycle control device for controlling an execution cycle of an instruction within a pipeline in pipeline processor, comprises
execution cycle number holding means for holding execution cycle numbers previously set for every instruction, and
execution cycle controlling means receiving an instruction to be executed, obtaining an execution cycle number corresponding to the received instruction, which is held in the execution cycle number holding means, and stopping updating the state of each circuit for use in execution of the instruction, in the processor, according to the obtained execution cycle number, for controlling the execution cycle of the instruction.

In the preferred construction, the execution cycle controlling means comprises analyzing means for analyzing the instruction, and internal control signal generating means for generating and supplying an internal control signal for stopping updating the state of each circuit for use in execution of the instruction during the instruction is executed, with reference to the execution cycle number corresponding to the instruction, which is held in the execution cycle number holding means.

In another preferred construction, the execution cycle number holding means holds the execution cycle number only as for part of an instruction which especially needs a variable control of an execution cycle number, of the instructions and
the execution cycle controlling means holds predetermined default execution cycle numbers and controls the execution cycle thereof, as for the instruction whose execution cycle number is not held in the execution cycle number holding means, according to the default execution cycle number.

In another preferred construction, the execution cycle number holding means holds several kinds of execution cycle numbers corresponding to a plurality of clock frequencies, as for each instruction.

In another preferred construction, the execution cycle number holding means holds execution cycle numbers for every instruction which are set in a programmable way, according to an operation from the outside.

In another preferred construction, the execution cycle number holding means stores the execution cycle numbers corresponding to the clock frequencies in advance, and
in every instruction, holds the execution cycle number corresponding to the clock frequency specified by an operation from the outside, as the execution cycle number of the instruction.

According to the second aspect of the invention, an execution cycle control method for controlling an execution cycle of an instruction within a pipeline, in pipeline processing, comprising the steps of
a step of setting execution cycle numbers for every instruction,
a step of obtaining the execution cycle number which has been set correspondingly to a given instruction when executing the instruction, and
a step of controlling the execution cycle of the instruction, by stopping updating the state of each circuit for use in execution of the instruction within the processor, according to the obtained execution cycle number.

In the preferred construction, in the execution cycle controlling step, an internal control signal for stopping updating the state of each circuit for use in execution of the instruction is generated and supplied, during the instruction is executed.

In another preferred construction, the execution cycle number setting step includes a step of specifying a clock frequency by an operation from the outside, in every instruction, and a step of setting the execution cycle number corresponding to the specified clock frequency, as the execution cycle number of the instruction, of the execution cycle numbers which have been previously stored correspondingly to the clock frequencies.

According to another aspect of the invention, a computer readable memory storing a control program for controlling an execution cycle of an instruction within a pipeline, in a pipeline processor, the control program comprises
a step of setting execution cycle numbers for every instruction,
a step of obtaining the execution cycle number which has been set correspondingly to a given instruction when executing the instruction, and
a step of controlling the execution cycle of the instruction, by stopping updating the state of each circuit for use in execution of the instruction within the processor, according to the obtained execution cycle number.

Other objects, features and advantages of the present invention will become clear from the detailed description given herebelow.

The present invention will be understood more fully from the detailed description given herebelow and from the accompanying drawings of the preferred embodiment of the invention, which, however, should not be taken to be limitative to the invention, but are for explanation and understanding only.

In the drawings:
Fig. 1 is a block diagram showing the structure of a processor provided with an instruction execution cycle control circuit according to an embodiment of the present invention;
Fig. 2 is a block diagram showing the structure of the instruction execution cycle control circuit according to an embodiment of the present invention;
Fig. 3 is a flow chart showing the operation of the embodiment;
Fig. 4A is a view showing the operation, according to the embodiment, in the case where every instruction within a pipeline is executed in one cycle;
Fig. 4B is a view showing the operation, according to the embodiment, in the case where an instruction within a pipeline is executed in two cycles;
Fig. 4C is a view showing the operation, according to the embodiment, in the case where two instructions within a pipeline are respectively executed in two cycles;
Fig. 4D is a view showing the operation, according to the embodiment, in the case where an instruction within a pipeline is executed in three cycles;
Fig. 5 is a view showing an example of instruction operating time;
Fig. 6A is an example of the conventional method of controlling an instruction in a variable execution cycle in pipeline processing, showing an operation example of every instruction being executed in one cycle within a pipeline;
Fig. 6B is an example of the conventional method of controlling an instruction in a variable execution cycle in pipeline processing, showing an operation example of an instruction within a pipeline being executed in two cycles;
Fig. 6C is an example of the conventional method of controlling an instruction in a variable execution cycle in pipeline processing, showing an operation example of two instructions within a pipeline being respectively executed in two cycles;
Fig. 6D is an example of the conventional method of controlling an instruction in a variable execution cycle in pipeline processing, showing an operation example of an instruction within a pipeline being executed in three cycles.

The preferred embodiment of the present invention will be discussed hereinafter in detail with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to unnecessary obscure the present invention.

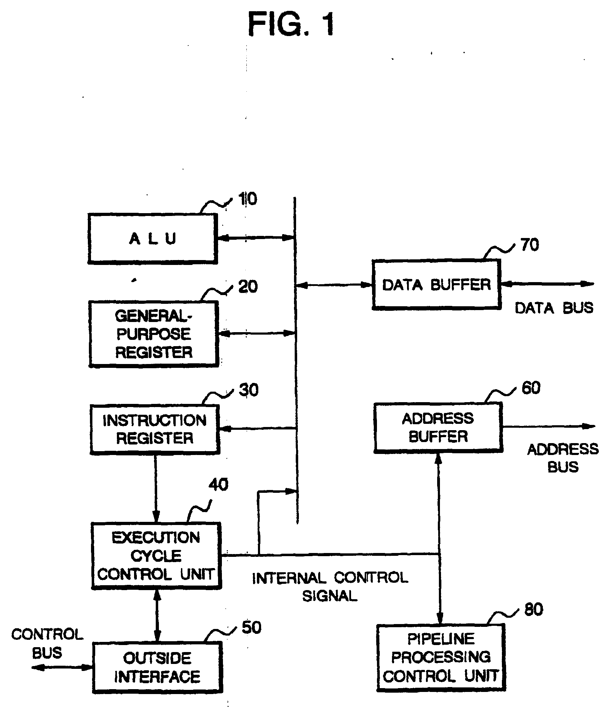

Fig. 1 is a block diagram showing the structure of a processor provided with an instruction execution cycle control circuit according to an embodiment of the present invention. With reference to Fig. 1, the processor according to the embodiment comprises an ALU (Arithmetic Logical Unit) 10 for executing arithmetic processing, a general-purpose register 20, an instruction register 30 for storing an instruction, an execution cycle control unit 40 and an outside interface 50 for controlling the execution cycle of an instruction, an address buffer 60, a data buffer 70, and a pipeline processing control unit 80 for controlling pipeline processing.

Control of an instruction with a variable execution cycle according to the embodiment may be realized by the execution cycle control unit 40 and the outside interface 50. The numbers of execution cycles of instructions are set up in a programmable way from the outside. Once the execution cycle number his been set up for a predetermined instruction, the instruction will be executed according to the set-up value until it is reset.

The execution cycle number of each instruction can be obtained from the clock frequency of a basic clock; accordingly, a clock frequency may be specified from the outside with each execution cycle number corresponding to a clock frequency being stored previously. Further, with a default number of the execution cycle previously set up, an operation may be automatically controlled according to the default number of the execution cycle, in case of requiring no variable control of execution cycle number.

The execution cycle control unit 40, upon receipt of an instruction from the instruction register 30, refers to the execution cycle number corresponding to the instruction which has been previously set up, and generates and supplies an internal control signal. The internal control signal is delivered to each circuit within the processor, including the ALU 10, the general-purpose register 20, the instruction register 30, the address buffer 60, the data buffer 70, and the pipeline processing control unit 80.

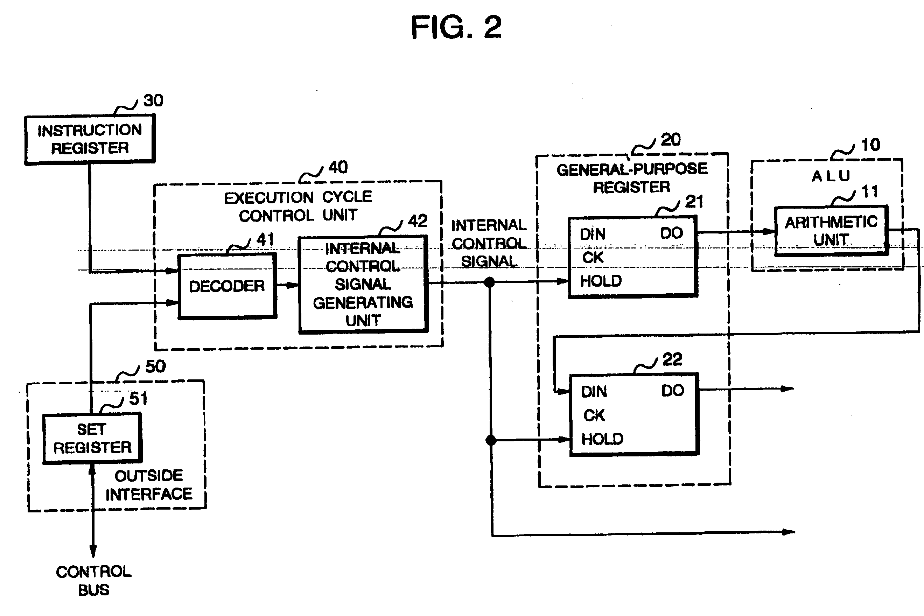

Fig. 2 is a block diagram showing the structure of an instruction execution cycle control circuit of the embodiment. As mentioned above, the instruction execution cycle control circuit of the embodiment may be realized by the execution cycle control unit 40 and the outside interface 50 shown in Fig. 1. Figs. 1 and 2 show the characteristic components of the embodiment, while the description of the other general components is omitted.

As shown in Fig. 2, the outside interface 50 includes a set register 51, which holds each execution cycle number of every instruction entered from the outside through a control bus. As mentioned above, several types of execution cycle numbers may be set as for each instruction, in accordance with a plurality of clock frequencies.

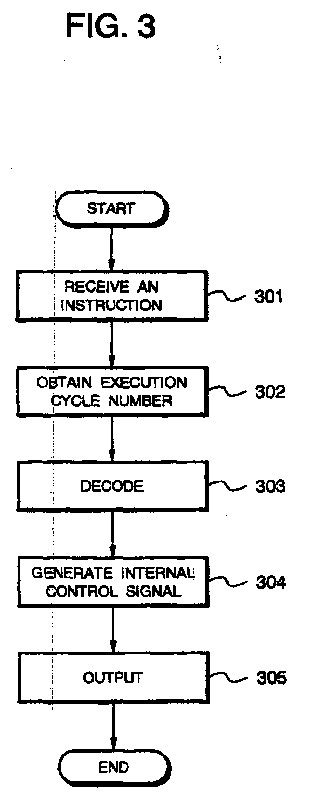

The execution cycle control unit 40 includes a decoder 41 for analyzing the execution cycle number of every instruction stored in the set register 51 of the outside interface 50 and an internal control signal generating unit 42 for generating an internal control signal for controlling the operation of pipeline processing in a processor according to the execution cycle number resulting from the analysis by the decoder 41. Fig. 3 is a flow chart showing the operation of the execution cycle control unit 40.

With reference to Fig. 3, upon receipt of a predetermined instruction from the instruction register 30 (Step 301), the execution cycle control unit 40 obtains the execution cycle number of the instruction from the set register 51 of the outside interface 50 (Step 302). The received instruction and the execution cycle number of the instruction are analyzed by the decoder 41 (Step 403), and an internal control signal is generated by the internal control signal generating unit 42 (Step 404). The generated internal control signal is supplied to each circuit within the processor (Step 405). In the example of the drawing, the internal control signal is supplied to the registers 21 and 22 of the general-purpose register 20.

In Fig. 2, the register 21 of the general-purpose register 20 stores the values for use in computation by an arithmetic unit 11 of the ALU 10, and the register 22 stores the computing results by the arithmetic unit 11 of the ALU 10. When the execution cycle number, for example, as for a multiplication instruction is set for a plurality of cycles in the set register 51, the internal control signal stops updating the values of the registers 21 and 22 of the general-purpose register 20 during the performance of the multiplication instruction in the plurality of cycles. If necessary, it may stop updating the control signal for the other circuits within the processor.

Thus, updating the values of the registers 21 and 22 of the general-purpose register 20 is stopped during a necessary number of cycles, thereby adjusting the timing of each instruction within a pipeline. This makes the execution cycle of an instruction variable.

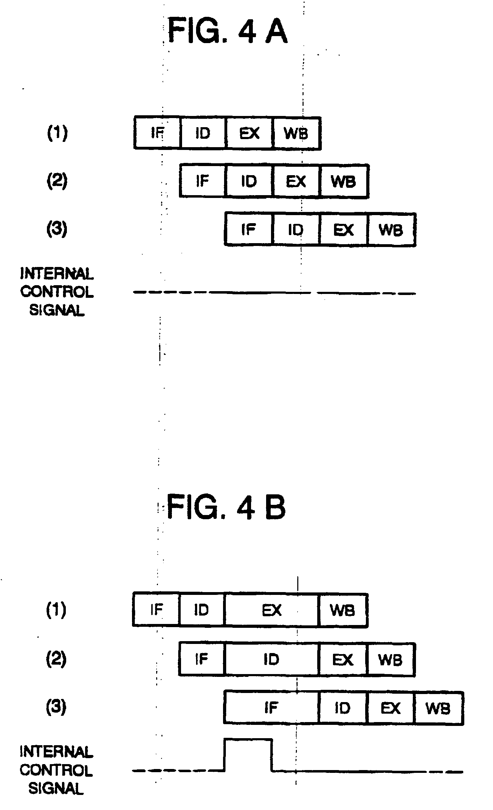

This time, a method of controlling an instruction with a variable execution cycle will be described, according to the embodiment, with reference to Figs. 4A to 4D. Figs. 4A to 4D show the operation in a pipeline processor whose pipeline consists of four stages; instruction fetch (IF), instruction decode (ID), execution (EX), and write back (WB). Here, assume that the instructions (1) to (3) shown in Figs. 4A to 4D are identical with the instructions (1) to (3) shown in Figs. 6A to 6D which have been referred to in the description of the conventional technique.

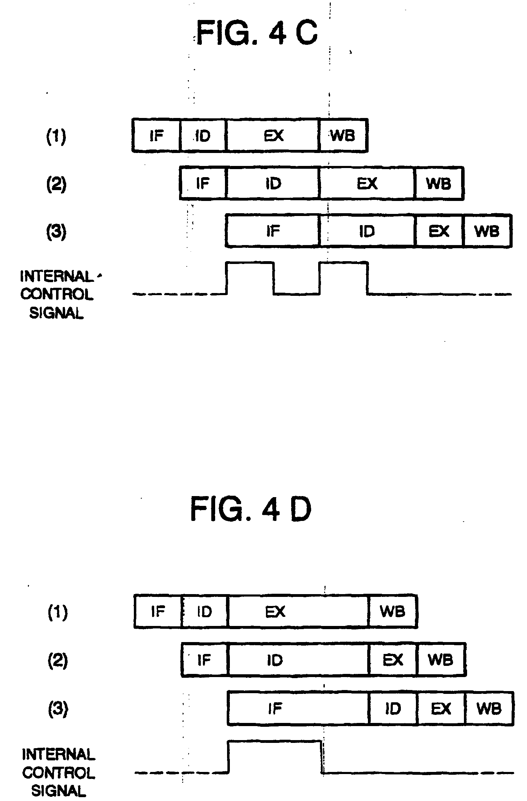

Fig. 4A is a view showing the operation in the case where every instruction within a pipeline is executed in one cycle; Fig. 4B is a view showing the operation in the case where an instruction within a pipeline is executed in two cycles; Fig. 4C is a view showing the operation in the case where two instructions within a pipeline are respectively executed in two cycles; and Fig. 4D is a view showing the operation in the case where an instruction within a pipeline is executed in three cycles.

Fig. 4A shows the case where the execution cycle number of every instruction (1), (2), and (3) is set up at "1". In this case, the internal control signal supplied from the execution cycle control unit 40 will not turn active, but the respective registers 21 and 22 of the general-purpose register 20 operate in the usual way.

Fig. 4B shows the case where the instruction (1) is a two-cycle instruction and the instructions (2) and (3) are one-cycle instructions. In this case, the instruction (1) is executed in two cycles; accordingly, the internal control signal becomes active at the portion of execution (EX) of the instruction (1).

Fig. 4C shows the case where the instructions (1) and (2) are two-cycle instructions and the instruction (3) is a one-cycle instruction. In this case, the instructions (1) and (2) are respectively executed in two cycles; accordingly, the internal control signal becomes active at the execution (EX) portions of the instructions (1) and (2).

Fig. 4D shows the case where the instruction (1) is a three-cycle instruction and the instructions (2) and (3) are one-cycle instructions. In this case, the instruction (1) is executed in three cycles; accordingly, the internal control signal becomes active at the portion of execution (EX) of the instruction (1).

In order to turn the internal control signal active at the above timing, execution cycle numbers depending on the case should be set in the set register 51 of the outside interface 50 in advance by entry from the outside.

As mentioned above, when the execution cycle control unit 40 receives an instruction from the instruction register 30, an internal control signal is generated with reference to the instruction execution cycle numbers which have been previously set in the set register 51 of the outside interface 50, and the generated internal control signal stops updating the values of the registers 21 and 22 of the general-purpose register 20 and the other control signal, which makes it possible to control the instruction execution cycle in a programmable and variable way and thereby to set the most suitable clock frequency for the characteristic of an application program.

As set forth hereinabove, according to the instruction execution cycle control circuit and the control method of the present invention, it is possible to control every instruction with a variable execution cycle, with no increase in gate size. This makes it possible to set the most suitable clock frequency for the characteristic of an application program, thereby improving efficiency of the processing according to the application program.

Further, economical processing can be achieved since it is possible to control every instruction with a variable execution cycle, with no increase in gate size.

Further, when an application program needs no high speed processing, the number of steps in a program can be reduced, by controlling every instruction with a variable execution cycle, and therefore the size of the program can be reduced.

## Claims

1. An instruction execution cycle control device for controlling an execution cycle of an instruction within a pipeline in pipeline processor, comprising:
execution cycle number holding means (51) for holding execution cycle numbers previously set for every instruction; and
execution cycle controlling means (40) receiving an instruction to be executed, obtaining an execution cycle number corresponding to the received instruction, which is held in said execution cycle number holding means (51), and stopping updating the state of each circuit for use in execution of the instruction, in the processor, according to the obtained execution cycle number, for controlling the execution cycle of the instruction.

2. An instruction execution cycle control circuit as set forth in Claim 1, wherein
said execution cycle controlling means (40) comprising
analyzing means (41) for analyzing the instruction, and
internal control signal generating means (42) for generating and supplying an internal control signal for stopping updating the state of each circuit for use in execution of the instruction during the instruction is executed, with reference to the execution cycle number corresponding to the instruction, which is held in said execution cycle number holding means (51).

3. An instruction execution cycle control circuit as set forth in Claim 1 or 2, wherein
said execution cycle number holding means (51)
holds the execution cycle number only as for part of an instruction which especially needs a variable control of an execution cycle number, of the instructions and
said execution cycle controlling means (40),
holds predetermined default execution cycle numbers and controls the execution cycle thereof, as for the instruction whose execution cycle number is not held in said execution cycle number holding means (51), according to the default execution cycle number.

4. An instruction execution cycle control circuit as set forth in Claim 1 or 2, wherein
said execution cycle number holding means (51)
holds several kinds of execution cycle numbers corresponding to a plurality of clock frequencies, as for each instruction.

5. An instruction execution cycle control circuit as set forth in Claim 1 or 2, wherein
said execution cycle number holding means (51)
holds execution cycle numbers for every instruction which are set in a programmable way, according to an operation from the outside.

6. An instruction execution cycle control circuit as set forth in Claim 5, wherein
said execution cycle number holding means (51)
stores the execution cycle numbers corresponding to the clock frequencies in advance, and
in every instruction, holds the execution cycle number corresponding to the clock frequency specified by an operation from the outside, as the execution cycle number of the instruction.

7. An execution cycle control method for controlling an execution cycle of an instruction within a pipeline, in pipeline processing, comprising the steps of:
a step of getting execution cycle numbers for every instruction;
a step of obtaining the execution cycle number which has been set correspondingly to a given instruction when executing the instruction; and
a step of controlling the execution cycle of the instruction, by stopping updating the state of each circuit for use in execution of the instruction within the processor, according to the obtained execution cycle number.

8. An execution cycle control method as set forth in Claim 7, wherein
in said execution cycle controlling step,
an internal control signal for stopping updating the state of each circuit for use in execution of the instruction is generated and supplied, during the instruction is executed.

9. An execution cycle control method as set forth in Claim 7 or 8, wherein
said execution cycle number setting step including
a step of specifying a clock frequency by an operation from the outside, in every instruction, and
a step of setting the execution cycle number corresponding to the specified clock frequency, as the execution cycle number of the instruction, of the execution cycle numbers which have been previously stored correspondingly to the clock frequencies.

10. A computer readable memory storing a control program for controlling an execution cycle of an instruction within a pipeline, in a pipeline processor, the control program comprising:
a step of setting execution cycle numbers for every instruction;
a step of obtaining the execution cycle number which has been set correspondingly to a given instruction when executing the instruction; and
a step of controlling the execution cycle of the instruction, by stopping updating the state of each circuit for use in execution of the instruction within the processor, according to the obtained execution cycle number.

11. A computer readable memory as set forth in Claim 10, wherein
in said execution cycle controlling step of the control program,
an internal, control signal for stopping updating the state of each circuit for use in execution of the instruction is generated and supplied, during the instruction is executed.

12. A computer readable memory as set forth in Claim 10 or 11, wherein
said execution cycle number setting step of the control program including
a step of specifying a clock frequency by an operation from the outside, in every instruction, and
a step of setting the execution cycle number corresponding to the specified clock frequency, as the execution cycle number of the instruction, of the execution cycle numbers which have been previously stored correspondingly to the clock frequencies.
